# EUROPEAN PATENT SPECIFICATION

(11) **EP 0 945 309 B1**
(45) Date of publication and mention of the grant of the patent: **08.09.2004**
(21) Application number: 99105041.0
(22) Date of filing: 22.03.1999
(51) Int. Cl.: B60R 21/16

(54) **Method of folding an air bag**
Verfahren zum Falten eines Airbags
Méthode de pliage d'un coussin de sécurité

(30) Priority: 25.03.1998 JP 9518298
(43) Date of publication of application: 29.09.1999
(73) Proprietor: TAKATA CORPORATION, Shiga 529-1388 (JP)
(72) Inventor: Kusaka, Syuji, Shiga, 529-1388 (JP); Ato, Tadayuki, Shiga, 529-1388 (JP)
(74) Representative: VOSSIUS & PARTNER

(56) References cited:
- DE-A- 2 536 933
- DE-A- 19 830 299
- US-A- 5 681 052
- PATENT ABSTRACTS OF JAPAN vol. 1996, no. 02, 29 February 1996 (1996-02-29) & JP 07 277125 A (TAKATA KK), 24 October 1995 (1995-10-24)
- PATENT ABSTRACTS OF JAPAN vol. 1998, no. 02, 30 January 1998 (1998-01-30) & JP 09 263204 A (TOYO TIRE &RUBBER CO LTD), 7 October 1997 (1997-10-07)
- PATENT ABSTRACTS OF JAPAN vol. 1998, no. 06, 30 April 1998 (1998-04-30) & JP 10 044900 A (SENSOR TECHNOL KK), 17 February 1998 (1998-02-17)

## Description

The present invention relates to a method of folding an air bag which is deployed to protect an occupant when a vehicle comes into collision. More particularly, the present invention relates to a method of folding an air bag which can provide suitable deployment of the air bag to secure sufficient ability for restraining an occupant and which is improved on the smoothness of the deployment.

The present invention can be applied to any of air bags for a driver, a front passenger, and a rear passenger.

A method of folding an airbag according to the features of the preamble of claim 1 is known for example from DE-A-25 36 933.

A method of folding an air bag in which the side edges of the air bag are folded toward an occupant has the following problems. In the initial stage of the deployment, a central portion of the air bag which is in contact with an inflator is rapidly inflated so that a bulk of folded portions is pushed out of the cover toward the occupant. In the final stage of the deployment, the air bag is inflated forward at a high speed so that the bulk of folded portions is further pushed out. There is a fear that the occupant is subjected to pressure due to the folded body of the air bag.

The object of this invention is to provide a method of folding an air bag which can provide suitable deployment of the air bag to secure sufficient ability for restraining an occupant and which is improved on the smoothness of the deployment.

This object is achieved with the features of the claims. This invention enables the folded air bag to have a loosing portion vertically or laterally extending thereby providing suitable deployment of the air bag to secure sufficient ability for restraining an occupant and improving the smoothness of the deployment.

In the method of folding the air bag mentioned above, it is preferable that side edges of the air bag are rolled up or folded in bellows on the side opposite to the occupant side. The air bag can be folded in a square or rectangular shape so that the air bag can be securely accommodated in the box-like cover. In addition, the air bag is deployed relatively entirely equally from the central portion thereof. The rolls or folded bodies of the side edges are prevented from advancing directly toward the occupant.

The second embodiment of the present invention provides a method of folding an air bag comprising a front panel on an occupant side and a rear panel on the side opposite to the occupant side, which is characterized by comprising (a) a step of forming a loosing portion vertically or laterally extending about the center of the air bag, and (b) a step of rolling up upper, lower, left, and right side edges of the air bag or folding them in bellows on the side opposite to the occupant side.

The loosing portion about the center of the air bag prevents the air bag as a whole from easily rapidly projecting, so that the air bag starts to inflate from the central portion thereof gradually. The works of the edges being rolled up or folded in bellows are the same as the case of the aforementioned first embodiment.

Hereinafter, the present invention will be described with reference to attached drawings.
Figs. 1(A)-1(F') are views illustrating the folding process according to the method of folding the air bag of the embodiment of the present invention.
Figs. 2(A)-2(C) are views illustrating the configurations of the air bag during the deployment In the order of time; Fig. 2(A) shows the state before the deployment of the air bag, Fig. 2(B) shows the state in the initial stage of the deployment, and Fig. 2(C) shows the state in the final stage of the deployment.
Fig. 3 is a side view showing the alternative example of the method of folding the air bag of the embodiment shown in Figs. 1(A)-1(F).
Fig. 4 is a side view showing the alternative example of the method of folding the air bag of the embodiment shown in Figs. 1(A)-1(F').

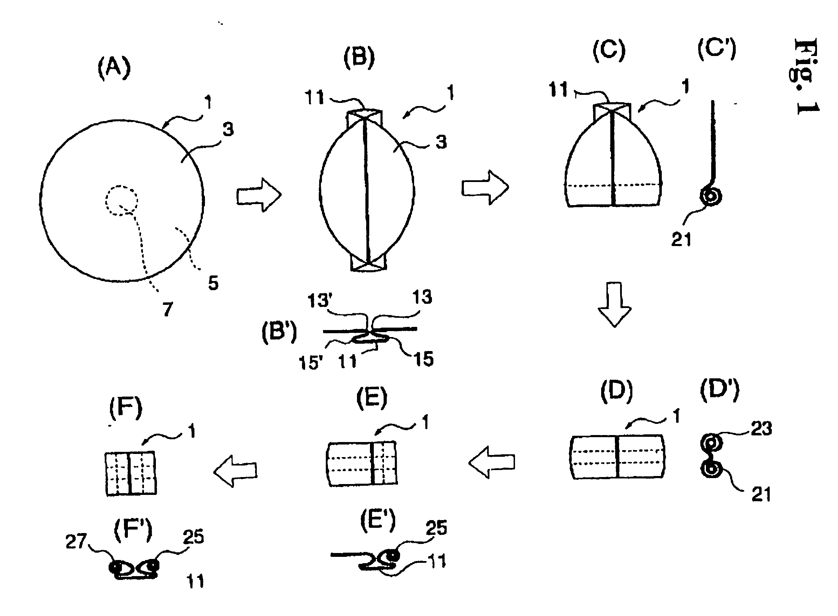

Figs. 1(A) through 1(F') are views illustrating process of folding an air bag according to one embodiment of the present invention. Fig. 1(A) is a view of the air bag 1, which is substantially circular in its plan view, taken at a front panel 3 side. The air bag 1 comprises the front panel 3 and a rear panel 5 which are strongly connected to each other around the peripheries thereof (for example, by sewing, adhesion, or welding). The rear panel 5 has a gas inlet 7 formed in the center thereof. Connected to the gas inlet 7 via a retainer (not shown) is an inflator (not shown) which generates deployment gas.

Figs. 1(B), 1(B') show a first stage of folding process where the air bag 1 is folded to have a loosing portion 11 vertically extending at the center thereof. Fig. 1(B) is a plan view and Fig. 1(B') is a side view. That is, the air bag 1 is provided with two folded lines 15, 15' on both sides of the vertical center thereof to extend parallel to each other and the both sides of the air bag are folded along the folded lines 15, 15' toward the center of the air bag 1. Then, both side edges outside of the folded lines 15, 15' are folded (along folded lines 13, 13') toward the outside. In this way, the vertically extending loosing portion 11 is formed at a side opposite to an occupant side.

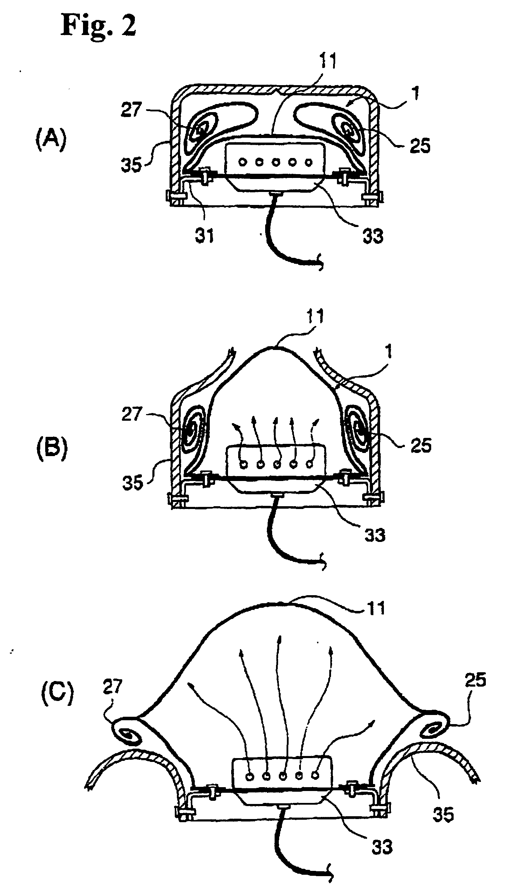

As shown in Figs. 1(C), 1(C') and 1(D), 1(D'), the upper and lower side edges of the air bag 1 are rolled up on the side opposite to the occupant side to form rolls 21, 23. Figs. 1(C'), 1(D') are side views. As shown in Fig. 1(D'), in which the left side is the occupant side and the right side is the side opposite to the occupant side, the lower roll 21 is rolled toward the center thereof in the counter-clockwise direction and the upper roll 23 is rolled toward the center thereof in the clockwise direction. This is because the air bag expands in such a manner that the trucks of the center of each roll becomes an arched line (see Fig. 2(C)) when the rolls become loose during the deployment of the air bag.

After that, as shown in Figs. 1(E), 1(E'), 1(F), 1(F'), the left and right side edges of the air bag 1 are rolled up on the side opposite to the occupant side to form rolls 25, 27 so that the rolls 25, 27 are positioned on the central loosing portion 11. As a result of this, the air bag 1 is formed in a small square as shown in Fig. 1(F). In this state, the retainer 31 and the inflator 33 are connected to the air bag 1 and are accommodated in a cover 35.

The description will be made as regard to the configurations of the air bag folded as shown in Figs. 1(A) through 1(F') during its deployment. Figs. 2(A) through 2(C) are views showing the configurations of the air bag of Figs. 1(A)-1(F') in the order of time. Fig. 2(A) shows the state before the deployment of the air bag, Fig. 2(B) shows the state of the initial stage of the deployment, and Fig. 2(C) shows the state of the final stage of the deployment.

In the state before the deployment shown in Fig. 2(A), the air bag 1 which is folded in a square or rectangular shape is accommodated in the box-like cover 35. The gas inlet 7 positioned toward the loosing portion 11 at the central portion of the air bag 1 is fixed to the inner periphery of the retainer 31. The inflator 33 is disposed in the center of the retainer 31.

As the inflator 33 is ignited, the loosing portion 11 at the central portion of the air bag 1 is first inflated while the side rolls 26, 27, 21,23, still stay in the cover 35 as shown in Fig. 2(B); in the final stage of the deployment, the central portion of the air bag 1 is further inflated and the folded portion or the rolls of the side edges are accordingly inflated so that the deployment of the air bag 1 is entirely relatively equal and smooth.

Hereinafter, an alternative example of the folding method according to the embodiment of Figs. 1(A)-1(F') will be described.

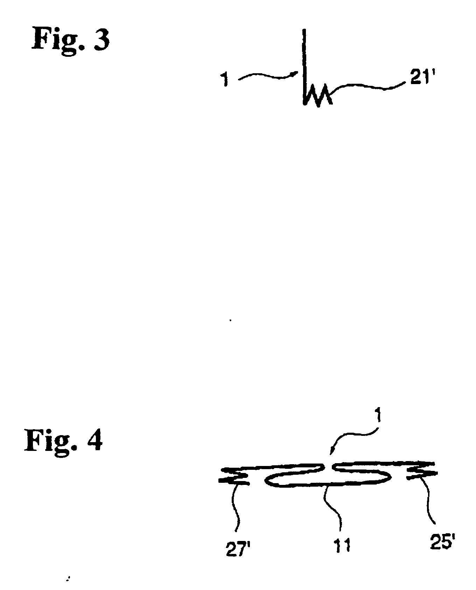

Though the side edges of the air bag are rolled up in the embodiment of Figs. 1(A)-1(F'), the right and left, upper and lower side edges may be folded in bellows 21', 25', 27' as shown in Figs. 3 and 4.

According to the method of folding the air bag of the embodiment, the combination of vertical, lateral, and vertical directions or the combination of lateral, vertical, and lateral directions is employed as the folding and/or rolling directions so that the loosing portion exists on the air bag in the vertical direction or the lateral direction.

Since the side edges are rolled up or folded in bellows on the side opposite to the occupant side, the air bag can be folded in a square or rectangular shape so that the air bag can be securely accommodated in the box-like cover. In addition, the air bag is deployed relatively entirely equally from the central portion thereof. The rolls or folded bodies of the side edges are prevented from advancing directly toward the occupant.

The loosing portion extending laterally or vertically across the air bag on the side opposite to the occupant side prevents the air bag as a whole from easily rapidly projecting, so that the air bag starts to inflate from the central portion thereof.

## Claims

1. A method of folding an airbag comprising the steps:
a) forming a loosing portion (11) at a rear side opposite to an occupant side by folding two sides of the airbag (1) relative to the centre area towards a front side (3) of the airbag (1), **characterized by** folding again the two sides of the first and counter first directions away from the centre area so that parts of the two sides are placed on the centre area, said loosing portion (11) extending along second and counter second directions perpendicular to the first and counter first directions in a centre area of the airbag (1),
b) rolling first edge portions of the airbag (1) in the second and counter second directions at the rear side to form rolls (21, 23), the lower roll (21) is rolled toward the centre area in the counter-clockwise direction and the upper roll (23) is rolled toward the centre-area in the clockwise direction and to form a middle area in the centre area, and
c) rolling second edge portions of the airbag in the first and counter first directions at the rear side to form rolls (25, 27) positioned on the central loosing portion (11) and to allow a part of the middle area to face the occupant.

2. A method of folding an airbag according to claim 1, wherein said folding the airbag includes rolling an edge portion of the airbag or folding the edge portion of the airbag in bellows.

3. A method according to any of claims 1 or 2, wherein said second edge portions are located on the loosing portion (11).

## Patentansprüche

1. Verfahren zum Falten eines Airbags mit den Schritten:
a) Ausbilden eines aufgehenden Abschnitts (11) an einer einer Insassenseite entgegengesetzten Rückseite durch Falten zweier Seiten des Airbags (1) bezüglich des Mittenbereichs zu einer Vorderseite (3) des Airbags (1) hin;
**gekennzeichnet durch**
erneutes Falten der beiden Seiten in eine erste Richtung und eine der ersten Richtung entgegengesetzte Richtung vom Mittenbereich weg, so daß Abschnitte der beiden Seiten auf dem Mittenbereich angeordnet sind, wobei der aufgehende Abschnitt (11) sich entlang einer zweiten Richtung und einer der zweiten Richtung entgegengesetzten Richtung senkrecht zur ersten Richtung und zur der ersten Richtung entgegengesetzten Richtung im Mittenbereich des Airbags (1) erstreckt;
(b) Rollen erster Randabschnitte des Airbags (1) in die zweite Richtung und in die der zweiten Richtung entgegengesetzte Richtung an der Rückseite, um Rollen (21, 23) zu bilden, wobei die untere Rolle (21) im Gegenuhrzeigersinn zum Mittenbereich hin und die obere Rolle (23) im Uhrzeigersinn zum Mittenbereich hin gerollt wird, und um einen Mittelabschnitt im Mittenbereich zu bilden; und
c) Rollen zweiter Randabschnitte des Airbags in die erste Richtung und die der ersten Richtung entgegengesetzte Richtung an der Rückseite, um Rollen (25, 27) zu bilden, die im mittleren aufgehenden Abschnitt (11) angeordnet sind, und zu ermöglichen, daß ein Teil des Mittelabschnitts dem Insassen zugewandt ist.

2. Verfahren zum Falten eines Airbags nach Anspruch 1, wobei das Falten des Airbags das Rollen eines Randabschnitts des Airbags oder das balgförmige Falten des Randabschnitts des Airbags aufweist.

3. Verfahren nach Anspruch 1 oder 2, wobei die zweiten Randabschnitte auf dem aufgehenden Abschnitt (11) angeordnet sind.

## Revendications

1. Procédé de pliage d'un coussin gonflable, comprenant les étapes :
a) formation d'une portion de libération (11) sur un côté arrière opposé à un côté passager en pliant deux côtés du coussin gonflable (1) par rapport à la zone centrale vers un côté frontal (3) du coussin gonflable (1), **caractérisé** en pliant à nouveau les deux côtés de la première et contre première directions en éloignement de la zone centrale de sorte que les parties des deux côtés sont placés dans la zone centrale, ladite portion de libération (11) s'étendant le long des seconde et contre seconde directions perpendiculaires aux première et contre première directions dans une zone centrale du coussin gonflable (1).
b) roulage des premières portions d'extrémité du coussin gonflable (1) dans les seconde et contre seconde directions sur le côté arrière pour former des rouleaux (21,23), le rouleau inférieur (21) est enroulé vers la zone centrale dans la direction anti-horaire et le rouleau supérieur (23) est enroulé vers la zone centrale dans la direction horaire et pour former une zone médiane dans la zone centrale, et
c) roulage des secondes portions d'extrémité du coussin gonflable dans les première et contre première directions sur le côté arrière pour former des rouleaux (25,27) positionnés sur la portion de libération centrale (11) et pour permettre à une partie de la zone médiane de faire face au passager.

2. Procédé de pliage d'un coussin gonflable selon la revendication 1, dans lequel ledit pliage du coussin gonflable comprend le roulage d'une portion d'extrémité du coussin gonflable ou le pliage de la portion d'extrémité du coussin gonflable dans le soufflet.

3. Procédé selon l'une quelconque des revendications 1 ou 2, dans lequel lesdites secondes portions d'extrémité sont situées sur la portion de libération (11).
